Europäisches Patentamt

European Patent Office

Office européen des brevets

(11) Veröffentlichungsnummer: **0 283 047**
**A2**

(12) **EUROPÄISCHE PATENTANMELDUNG**

(21) Anmeldenummer: 88104394.7

(22) Anmeldetag: 18.03.88

(51) Int. Cl.⁴: **G01J 5/00**

(30) Priorität: 19.03.87 DE 3709065
31.08.87 DE 3729063

(43) Veröffentlichungstag der Anmeldung:
21.09.88 Patentblatt 88/38

(84) Benannte Vertragsstaaten:
**AT BE CH DE FR GB IT LI NL SE**

(71) Anmelder: **Max-Planck-Gesellschaft zur**
**Förderung der Wissenschaften e.V.**
**Bunsenstrasse 10**
**D-3400 Göttingen(DE)**

(72) Erfinder: **Meijer, Gerard**
**Katholieke Universiteit**
**Nijmegen(NL)**
Erfinder: **Andresen, Peter, Dr.**
**Hakenbreite 19**
**D-3402 Dransfeld(DE)**
Erfinder: **Meier, Gert E.A., Dr.**
**Am Menzelberg 6**
**D-3401 Roringen(DE)**
Erfinder: **Lülf, Hans Werner, Dr.**
**Düstere Strasse 21**
**D-3400 Göttingen(DE)**

(74) Vertreter: **von Bezold, Dieter, Dr. et al**
**Dr. Dieter von Bezold Dipl.-Ing. Peter Schütz**
**Dipl.-Ing. Wolfgang Heusler Brienner Strasse**
**52**
**D-8000 München 2(DE)**

(54) Verfahren und Einrichtung zur berührungsfreien Gewinnung von Daten zur ortsaufgelösten Bestimmung der Dichte und Temperatur in einem Messvolumen.

(57) Verfahren und eine Einrichtung zur berührungsfreien, ortsaufgelösten, momentanen Messung der Dichte und/oder Temperatur eines Gases in einem Meßvolumen, das eine relativ große Fläche und eine relativ kleine Dicke haben kann, bei welchem durch Laserstrahlung zwei Rotationsübergänge eines molekularen Bestandteils des Gases angeregt werden, bei denen der angeregte Zustand eine Lebensdauer hat, die wesentlich kürzer als die reziproke Stoßfrequenz im Gas ist, und bei dem die den beiden Rotationsübergängen entsprechende Fluoreszenzintensität oder Absorption gemessen wird. Aus den gemessenen Intensitäten lassen sich die Dichte und Temperatur errechnen.

Fig. 1

## Verfahren und Einrichtung zur berührungsfreien Gewinnung von Daten zur ortsaufgelösten Bestimmung der Dichte und Temperatur in einem Meßvolumen

Die vorliegende Erfindung betrifft ein Verfahren und eine Einrichtung zur berührungsfreien Gewinnung von Daten zur örtlich aufgelösten Bestimmung der momentanen Dichte und/oder Temperatur ("Dichteverteilung", "Temperaturverteilung") eines molekularen Gases in einem Meßvolumen, das eine relativ große Fläche und eine relativ kleine Dicke haben kann, durch laserinduzierte Fluoreszenz (LIF).

Es ist aus der Zeitschrift CHEMICAL PHYSICS LETTERS Band 114, No. 5, 6, 15. März 1985, S. 451-455, bekannt, einzelne Rotationsschwingungszustände des molekularen Sauerstoffs bei Drücken bis zu etwa 0,4 MPa durch Laserstrahlung selektiv anzuregen und die resultierende laserinduzierte Fluoreszenz (LIF) zu messen.

Die Anwendung der bekannten, mit laserinduzierter Fluoreszenz (LIF) arbeitenden Verfahren zur Bestimmung von Dichten und Temperaturen in einem Gasgemisch ist bei höheren Drücken problematisch, weil die Fluoreszenzintensität wesentlich durch Stöße der laserangeregten Moleküle mit dem Umgebungsgas, das sogenannte "Quenchen", bestimmt wird. Das Quenchen hängt über die Stoßparameter, insbesondere die Stoßfrequenz, von der momentanen Gaszusammensetzung (den Partialdichten $n_i$ der Komponenten des Gasgemisches) und der Temperatur ab. Die LIF eignet sich daher zum Beispiel nicht für genauere Untersuchungen von Verbrennungsvorgängen in Kraftfahrzeugmotoren und dergleichen, da sowohl die Gaszusammensetzung als die Temperatur im Verbrennungsraum stark orts-und zeitabhängige Größen sind und das Quenchen deshalb ebenfalls eine komplizierte, orts-und zeitabhängige Funktion ist, die prinzipiell unbekannt ist.

Der vorliegenden Erfindung liegt die Aufgabe zugrunde, Verfahren und Einrichtungen anzugeben, mit denen die Dichte und/oder die Temperatur eines Bestandteiles eines Gases in einem Meßvolumen auch bei höheren Drucken momentan, zeitlich aufgelöst und exakt gemessen werden können.

Diese Aufgabe wird erfindungsgemäß dadurch gelöst, daß durch Laserstrahlung mindestens ein molekularer Rotationsübergang eines molekularen Bestandteiles des Gases angeregt wird, und daß die Fluoreszenz aus dem angeregten Rotationsübergang oder die Absorption durch diesen Übergang während einer Zeitspanne erfaßt wird, welche wesentlich kürzer als die reziproke Stoßfrequenz im Gas ist.

Bei einer bevorzugten Ausführungsform des vorliegenden Verfahrens wird ein molekularer Rotationsübergang angeregt, der eine wesentlich kürzere Lebensdauer hat als die reziproke Stoßfrequenz.

Vorzugsweise wird ein Gas verwendet, das Moleküle enthält, welche im elektronisch angeregten Zustand prädissoziieren, und es wird die von diesen Molekülen während der Prädissoziationslebensdauer emittierte Fluoreszenzstrahlung gemessen.

Die Lebensdauer des angeregten Zustandes kann auch durch laserinduzierte Entvölkerung, z. B. Ionisierung, verkürzt werden.

Schließlich kann man das Ziel, eine von Stößen (Quenchen) unbeeinflußte laserinduziere Fluoreszenzstrahlung zur Dichte-und/oder Temperaturbestimmung messen zu können, auch dadurch erreichen, daß man die Fluoreszenz durch einen sehr steilen und kurzen Laserstrahlungsimpuls mit einer Dauer, die kurz im Vergleich zur reziproken Stoßfrequenz im Meßvolumen ist und die im Picosekundenbereich liegen kann, anregt und die Erfassungsdauer der Fluoreszenz durch elektronische Maßnahmen, wie Tasten des Strahlungsempfängers und/oder der Fluoreszenz-oder Absorptionssssignalverarbeitungseinrichtung auf eine Zeitspanne beschränkt, in der Stoßvorgänge im Gas noch keinen merklichen Einfluß auf die Fluoreszenzintensität oder Absorption haben.

Das vorliegende Verfahren ermöglicht es, die Dichte und/oder Temperatur in einem Volumen, das dünn und flächig, d. h. "blattartig" sein kann, auch bei höheren Drücken momentan (kurzzeitig), ortsaufgelöst und exakt zu messen.

Durch die Verwendung schnell prädissoziierender Zustände, d.h. von Zuständen, bei denen die Prädissoziationsrate erheblich größer als die Quenchrate ist, erhält man ein Fluoreszenzsignal, das nicht durch Quenchen verfälscht ist. Daher erlaubt das Verfahren eine fehlerfreie berührungslose Messung absoluter oder relativer Dichten.

Bei bevorzugten Ausführungsformen der Erfindung werden also nur solche Molekülübergänge in der LIF verwendet, die im elektronisch angeregten Zustand prädissoziieren und daher eine extrem kurze Lebensdauer $\tau_p$ haben. Die Prädissoziationslebensdauer $\tau_p$ vieler Moleküle ist bei höheren Energien (kürzeren Wellenlängen) wesentlich kürzer als die Strahlungslebensdauer $\tau_r$. Da solche Moleküle im wesentlichen nur während der kurzen Zeitspanne $\tau_p$ Licht emittieren können, wird die Fluoreszenz nicht durch Stöße gestört, da in der sehr kurzen Zeit $\tau_p$ selbst bei hohen Drucken kaum Stöße auftreten. Für $H_2O$ liegt die Lebensdauer $\tau_p$ im Bereich von wenigen Picosekunden. Daher kann man mittels LIF von $H_2O$

Messungen bei Drücken bis zu 5 MPa ohne Fluoreszenzquenchen bestimmen. Bei OH liegt $\tau_p$ im Bereich von 100 psec, so daß Fluoreszenzquenchen bis zu Drücken von etwa 0,1 MPa vernachlässigbar ist.

Das Verfahren kann z. B. zur Sichtbarmachung von zeitlichen und räumlichen Dichte-und/oder Temperaturverteilungen oder -verläufen bei Verbrennungsvorgängen, wie in Benzinmotoren, weiterhin zur Darstellung von Strömungen oder zur Messung von Luftverunreinigungen wie mit Hilfe des LIDAR-Verfahrens verwendet werden. In diesem Fall wird mit mindestens einem Paar zeitlich versetzter Laser-Anregungspulse die Dichte eines bestimmten Quantenzustandes im Meßfeld zu verschiedenen Zeitpunkten gemessen und man kann dadurch die Änderung der Topologie im Meßfeld bestimmen. Der zeitliche Abstand der beiden Anregungsimpulse kann bei der Untersuchung turbulenter Strömungen, z. B. in Verbrennungsvorgängen, in der Größenordnung von Mikrosekunden liegen. Generell wird der zeitliche Abstand der beiden Anregungsimpulse so gewählt, daß sich einerseits die gewünschte zeitliche Auflösung ergibt und daß andererseits die Topologie noch wiedererkennbar ist.

Im folgenden wird die Erfindung unter Bezugnahme auf die Zeichnungen näher erläutert. Es zeigen:

Fig. 1 ein Energieniveauschema einer Fluoreszenzanregung;

Fig. 2 eine schematische Prinzipdarstellung einer Einrichtung zur Durchführung des vorliegenden Verfahrens;

Fig. 3, 4 und 5 jeweils eine schematische Darstellung einer praktischen Ausführungsform einer erfindungsgemäßen Einrichtung zur Durchführung des vorliegenden Verfahrens.

Der Begriff "Molekül" soll hier sowohl Moleküle im engeren Sinne, wie $H_2O$ und $O_2$, als auch mehratomige, insbesondere zweiatomige, Molekülreste oder Radikale, wie OH, umfassen.

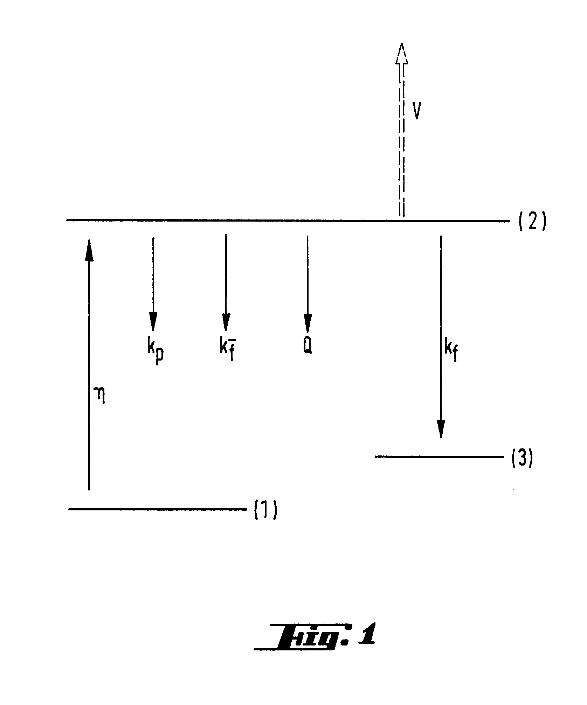

Als erstes soll das Prinzip des erfindungsgemäßen Verfahrens anhand des vereinfachten Energieniveauschemas in Fig. 1 erläutert werden. Mit einem Laser wird ein Molekül (im folgenden auch "Tracermolekül" genannt) aus einem Quantenzustand 1 in einen Quantenzustand 2 mit einer Anregungsrate angeregt. Bei dem gewählten Tracermolekül erleidet der Quantenzustand 2 Verluste durch

a) Fluoreszenz mit einer Gesamt-Rate $\bar{k}$ f

b) Prädissoziation mit einer Rate $k_p$ und

c) Quenchen durch Stöße mit einer Rate Q.

Ein Teil der Fluoreszenz, in Fig. 1 entsprechend dem Übergang vom Quantenzustand 2 in den Quantenzustand 3, wird mit geeigneten Nachweismethoden (z. B. Photomultiplier oder Bildverstärker) gemessen. Die Rate dieses zu messenden Fluoreszenzanteils wird mit $k_f$ bezeichnet.

Als erstes soll nun die Messung der Dichte $n_1$ des Tracermoleküls im Quantenzustand 1 diskutiert werden. Für den Spezialfall einer nicht zu großen Anregungsrate $\eta$ aus dem Quantenzustand 1 in den Quantenzustand 2 kann man den zeitlichen Verlauf der Dichte im Zustand 2 berechnen und erhält durch zeitliche Integration mit der Bestrahlungszeit $\tau$:

$$\int n_2(t)\, dt = \frac{\eta\, n_1\, \tau}{k_p + \bar{k}_f + Q} \tag{1}$$

Für die Fluoreszenz F von Zustand 2 nach Zustand 3 folgt:

$$F = \frac{k_f}{k_p + \bar{k}_f + Q}\, \eta\, n_1\, \tau \tag{2}$$

Im Unterschied zu den bisher verwendeten LIF-Verfahren bei hohen Drucken tritt hier (wegen der Wahl eines im angeregten Zustand prädissoziierenden Tracermoleküls) als wesentlicher Term die Prädissoziation auf.

Ohne Prädissoziation ($k_p = 0$) erhält man

3

$$F = \frac{k_f}{\overline{k_f} + Q} \, \eta \, n_1 \, \tau \qquad (3)$$

Bei Atmosphärendruck liegt die Quenchrate im Bereich $10^9 - 10^{10}$ sec während die Fluoreszenzrate $k_f$ im Bereich $10^6 - 10^8$ /sec liegt. Daher ist $k_f$ gegen $Q$ zu vernachlässigen und es ergibt sich

$$F = \frac{k_f}{Q} \, \eta \, n_1 \, \tau \qquad (4)$$

Die Fluoreszenz ist daher umgekehrt proportional zur Quenchrate $Q$. Um die Dichte $n_1$ in diesem Fall ($k_p = 0$) zu bestimmen, ist die Kenntnis der Quenchrate $Q$ notwendig, die insbesondere z. B. in turbulenten Verbrennungssystemen empfindlich von der Gaszusammensetzung, von der Temperatur und den entsprechenden Ratekonstanten für die Stöße verschiedener Moleküle mit dem Tracermolekül im Quantenzustand 1 abhängt. Örtliche und zeitliche Variation dieser Größe macht eine präzise Bestimmung der Dichte $n_1$ daher praktisch unmöglich.

Im Unterschied dazu gilt im erfindungsgemäßen Falle der schnellen Prädissoziation $k \gg Q + k_f$ und man erhält:

$$F = \frac{k_f}{k_p} \, \eta \, n_1 \, \tau \qquad (5)$$

Für den Fall linearer Näherung gilt für die Anregungsrate

$$\eta \, \tau = \overline{\sigma} \mathsf{I} \, \tau \qquad (6)$$

Dabei ist I•T die Anzahl L der Photonen pro cm² und s$^{-1}$ und $\overline{\sigma}$ der integrierte Absorptionskoeffizient. Damit ergibt sich:

$$F = \frac{\overline{\sigma} \, k_f}{k_p} \, L \, n_1 \qquad (7)$$

Der wesentliche Unterschied zu Gleichung (4) besteht darin, daß die Stöße keine Rolle spielen. Die zu messende Fluoreszenz ist mit der Dichte $n_1$ nur über die meßbare Größe L und über Molekülkonstanten gekoppelt.

Das erfindungsgemäße Verfahren beruht also in erster Linie im wesentlichen auf einer Verkürzung der Lebensdauer des angeregten Zustands, so daß die Quenchrate vernachlässigbar klein wird. In dem oben beschriebenen Ausführungsbeispiel wird diese Verkürzung durch Prädissoziation erreicht.

Eine andere Methode, die Lebensdauer zu verkürzen ist die Entvölkerung von Quantenzustand 2 durch einen Laser oder eine andere entsprechende Lichtquelle. Ein derzeit bevorzugtes Beispiel ist Ionisation aus Quantenzustand 2.

Für intensive Laser kann man die Verlustrate V aus dem angeregten Zustand ebenfalls größer machen als die Quenchrate. Fluoreszenz wird dann nur während der durch den Laser verkürzten Lebensdauer emittiert. Der Vorteil dieses Verfahrens besteht in der über den Laser vorwählbaren Lebensdauer.

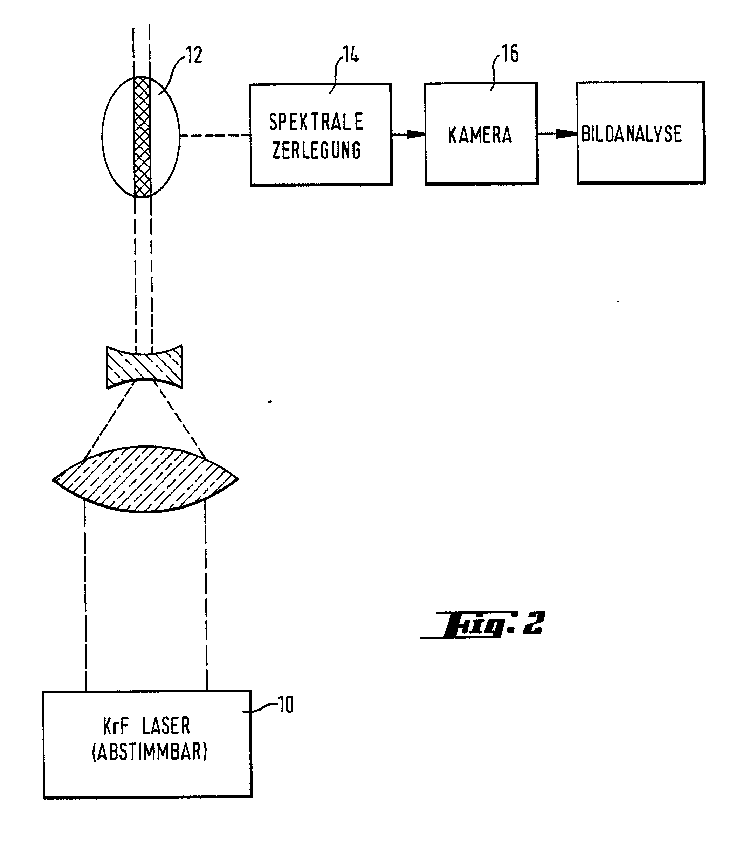

Wie in Fig. 2 schematisch dargestellt ist, wird bei dem vorliegenden Verfahren mit einem vorzugsweise abstimmbaren Laser 10 ein Meßvolumen 12 bestrahlt, in dem sich ein molekulares Gas befindet, dessen Dichteverteilung bestimmt werden soll. Der Begriff "molekulares Gas" soll auch Gasgemische umfassen, die einen geeigneten molekularen Bestandteil enthalten, also z. B. Verbrennungsgase, die entsprechende "Tracermoleküle" enthalten. Im Meßvolumen werden verschiedene molekulare Übergänge von Molekülen (Moleküllinien) im Gas, vorzugsweise OH oder $H_2O$, die in der praxis meistens vorhanden sind, bei ver-

4

schiedenen Frequenzen durch Laserstrahlung zur Fluoreszenz angeregt. Im allgemeinen wird man Übergänge bevorzugen, bei denen sich sowohl die elektronische Quantenzahl als auch die Rotationsquantenzahl und ggf. auch die Schwingungsquantenzahl ändern. Wenn das Gas von sich aus keine für die LIF-Messung geeignete Molekülart enthält, kann eine solche zum Zwecke der Messung zugesetzt werden. Die Fluoreszenzintensität ist ein Maß für die Besetzung des Zustandes (Ausgangszustandes), aus dem heraus die Anregung erfolgt. Regt man z B. bei einer Frequenz $\nu_1$ aus dem Rotationszustand $j_1$ an, so ist die Fluoreszenzintensität proportional zur Dichte der Teilchen im Rotationszustand $j_1$. Die Fluoreszenzintensität I wird örtlich (x, y) über die Fläche des Meßvolumens, zeitlich (t) und spektral ($\lambda$) aufgelöst gemessen, d.h. man mißt $I = I(x,y;t,\lambda)$. Hierzu wird das Fluoreszenzlicht z. B. durch eine wellenlängenselektive Einrichtung (14), z. B. durch Filter oder Spektrometer, spektral zerlegt und mit einer örtlich empfindlichen und zeitlich auflösenden Einrichtung (16), wie einer photographischen oder photoelektronischen Kamera, z. B. einem getasteten Bildverstärker mit nachgeschalteter CCD-Kamera, kurzzeitig erfaßt.

Wird Fluoreszenz F mit einer kalibrierten Einrichtung gemessen, so kann man die Dichte absolut bestimmen. Mit einem örtlich auflösenden Nachweis (z. B. Bildverstärker) kann die Dichte $n_1$ örtlich aufgelöst gemessen werden. Für relative Dichtemessungen (z. B. Dichte an verschiedenen Orten) ist eine Kalibrierung nicht notwendig.

In dem bis hier geschilderten Verfahren wird die Dichte nur in einem Quantenzustand gemessen. Soll die Partialdichte des Tracermoleküls nicht nur im Quantenzustand 1 gemessen werden, sondern insgesamt, so muß auch die Temperatur mit dem im folgenden beschriebenen Verfahren gemessen werden. Diese Weiterbildung des Verfahrens kann dementsprechend also auch zur momentanen, ortsaufgelösten Temperaturmessung verwendet werden.

Die Messung der Fluoreszenzintensität wird also für zwei verschiedene Frequenzen, bei denen verschiedene Rotationslinien $j_1$, $j_2$ angeregt werden, durchgeführt. Aus den entsprechenden Fluoreszenzintensitäten $I_1(x,y; t_1,\lambda_1)$ und $I_2(x,y;t_2,\lambda_2)$ bei den Frequenzen $(\nu_1)$ und $(\nu_2)$ kann dann das Temperaturfeld (die örtliche Temperaturverteilung im Meßvolumen) errechnet werden. $t_1$, $t_2$ bzw. $\lambda_1$, $\lambda_2$ sollen andeuten, daß die Fluoreszenz zu verschiedenen Zeiten bzw. bei verschiedenen Wellenlängen analysiert werden kann.

Die Bestimmung der Temperatur geht davon aus, daß im thermischen Gleichgewicht die Verteilung über die Rotationszustände durch die Boltzmann-Verteilung gegeben ist:

$$P_j = A(2j+1)\, e^{-E_j/kT} \qquad (8)$$

Dabei sind
k die Boltzmann-Konstante,
$E_j$ die Energie des Rotationszustandes J und
A ein Normierungsfaktor.
Mißt man die Besetzung zweier Rotationszustände (Quantenzahlen $j_1$, $j_2$) durch LIF, so ergibt sich die Temperatur aus den gemessenen Fluoreszenzintensitäten $I_1(x,y;t, \lambda_1)$ bei $j_1$ und $I_2(x,y;t, \lambda_2)$ bei $j_2$ zu

$$T(x,y;t) = \frac{(E_{j2} - E_{j1})}{k\, \ln\left(\dfrac{(2j_2+1)}{(2j_1+1)}\dfrac{I_1(x,y;t,\lambda_1)}{I_2(x,y;t,\lambda_2)}\right)} \qquad (9)$$

Damit kann man also das Temperaturfeld T(x,y ; t) örtlich und zeitlich aufgelöst erhalten. Die zeitliche Auflösung ergibt sich durch die kurzdauernde Emission (Triggerung) des Lasers.

Die Fluoreszenzintensitäten $I_1$, $I_2$ müssen getrennt für die beiden Frequenzen bestimmt werden. Dazu kann man zwei verschiedene Laser verwenden, die mit einer kleinen Zeitverzögerung impulsgeschaltet werden. Der eine Laser wird auf der Frequenz $\nu_1$, der andere auf der Frequenz $\nu_2$ betrieben. Die Zeitverzögerung zwischen den beiden Laserpulsen wird so klein gewählt, daß keine Bewegungen in der zu analysierenden Probe auftritt (z. B. 100 nsec). $I_1$ und $I_2$ werden nur während der Laserpulse gemessen und können daher durch zeitliche Auflösung getrennt gemessen werden.

Bei speziellen Molekülen (z. B. OH) kann man auch mit einem Laser arbeiten, der gleichzeitig auf zwei oder mehr Frequenzen emittiert (z. B. mit einem breitbandigen Laser). In diesem Fall wird die separate Messung von $I_1$ und $I_2$ auch über die unterschiedliche spektrale Lage der Fluoreszenz möglich. Mit einem Laser, dessen Strahlung die beiden Frequenzen $\nu_1$ und $\nu_2$ enthält, werden wiederum zwei Rotationslinien angeregt. Die Fluoreszenz wird spektral zerlegt. Bei der Wellenlänge $\lambda_1$ wird die Fluoreszenzintensität $I_1$-$(x,y;t, \lambda_1)$ verursacht durch den Frequenzanteil bei $\nu_1$ und bei der Wellenlänge $\lambda_2$ wird die Fluoreszenzintensität $I_2(x,y;t, \lambda_2)$ verursacht durch den Frequenzanteil bei $\nu_2$ gemessen. Die spektrale Zerlegung kann mit Spektrometern oder Filtern erfolgen.

Mit der Kenntnis des Temperaturfeldes ergibt die Boltzmannverteilung für die Besetzung des Quantenzustandes j:

$$n(j) = n\, A_o\, (2j + 1)\, \exp(-E_j/kT) \qquad (10)$$

mit der Gesamtdichte n des Tracermoleküls. Für den Quantenzustand 1 sei $n_1$ gemessen und die Temperatur bekannt. Damit ergibt sich also:

$$n = \frac{n(j_1)}{A_o\, (2j_1+1)\, \exp(-E_{j1}/kT)} \qquad (11)$$

$A_o$ ist eine für die gemessene Temperatur theoretisch bestimmbare Normierungskonstante.

Durch eine Messung der Temperatur auf zwei Rotationslinien kann daher die Dichte direkt mitbestimmt werden.

Bei einem Versuch wurden ein freies OH enthaltendes Gas (offene atmosphärische Flamme) unter Atmosphärendruck und ein abstimmbarer KrF-Excimer-Laser (248,0-248,9 nm) verwendet. Die Anregung des OH erfolgt in diesem Frequenzbereich von $^2\pi$ nach $^2\Sigma$, von $v''=0$ nach $v'=3$. Dieser Schwingungsübergang wurde erstmalig mit einem Laser angeregt. Eine ganze Reihe von Rotationslinien wurde identifiziert, u. a. ($R_2(15)$, $Q_2(11)$, $Q_2(10)$, $Q_1(11)$, $Q_1(10)$, $R_1(15)$, $O_2(6)$, $P_2(8)$, $P_1(8)$, $R_2(14)$. Die Fluoreszenz wurde spektral zerlegt. Es treten verschiedene Banden in Emission auf, die zum Teil durch Quenchen gestört und zum Teil nicht durch Quenchen gestört sind. Es wird direkte Fluoreszenz aus $v'=3$ nach $v''=3$ ($v''=2$, $v''=1$) bei $\lambda=325$ nm (294 nm; 268 nm) beobachtet. Diese Fluoreszenz ist nicht durch Quenchen gestört, da die Lebensdauer im Zustand $v'=3$ sehr kurz ($\approx 100$ psec) ist. Innerhalb dieser kurzen Zeit findet im elektronisch angeregten $^2\Sigma$-Zustand nur geringe Umverteilung durch Stöße statt. Das wurde direkt verifiziert: Bei diesen Wellenlängen (325, 294, 268 nm) treten einzelne Rotationslinien (P,Q,R) in Emission auf. Die Umverteilung auf andere Rotationszustände ist bei Normaldruck weniger als 10%. Im Gegensatz dazu treten in der Fluoreszenz aus $v'=2,1,0$, die bei verschiedenen anderen Wellenlängen auftritt (287, 318, 281, 312, 306 nm), viele Rotationslinien auf. Wegen der größeren Lebensdauer $\tau_p$ spielt hier das Quenchen eine wesentlich größere Rolle. Daher ist bei OH nur die direkte Fluoreszenz aus $v'=3$ bei höheren Drücken geeignet. Ein wesentlicher Vorteil des Verfahrens beruht also auf der Ausnutzung der sehr schnellen Prädissoziation aus höheren Schwingungszuständen, die bei vielen anderen Molekülen ebenfalls bei kurzen Wellenlängen zu finden ist.

Die spektrale Zerlegung ist hier wichtig, da gleichzeitig verschiedene fluoreszierende Moleküle angeregt werden. Nur die spektrale Diskriminierung der Fluoreszenz erlaubt die zweifelsfreie Identifizierung der einzelnen Moleküle.

Die gleichen Maßnahmen können z. b. innerhalb desselben Spektralbereiches (248,0-248,9 nm) auch für die Moleküle $H_2O$ und $O_2$ verwendet werden. Bei $H_2O$ wird der C-Zustand mit Zweiphotonenanregung erreicht. Die Lebensdauer $\tau_p$ des C-Zustandes ist $\leq$ 5 psec. Während dieser Lebensdauer findet eine Emission von dem C-Zustand zum A-Zustand (380-600 nm) statt. In vollständiger Analogie zu OH erfolgen in der sehr kurzen Lebensdauer $\tau_p$ kaum Stöße. Die Fluoreszenz wird selbst bei höheren Drucken, z. B. bis 2 MPa nicht gequencht und erlaubt Messungen bei noch höheren Drucken als bei OH.

Im Abstimmbereich des KrF-Lasers liegen eine Reihe Sauerstoff-Linien des Schwingungsübergangs $v''=6$ nach $v'=0$ (R-Linien: j=9,11,13,15,17, 19; P-Linien: j=7,9,11,13,15) und des Schwingungsübergangs von $v''=7$ nach $v'=2$ (R-Linien: j=7,9,11,13,15; P-Linien: j=5,7,9,11), die sich für das vorliegende Verfahren gut eignen.

Die Verwendung eines abstimmbaren KrF-Lasers hat gegenüber herkömmlichen Lasern den wesentlichen Vorteil, daß die Leistung wesentlich größer ist (ca. das 1000-fache in diesem Spektralbereich). Trotz dieser hohen Leistung und guter Fokussierung ist der Einphotonenübergang für OH ($^2\Pi$, $v''=0 \to {}^2\Sigma, v'=3$) noch nicht abgesättigt, da der Franck-Condon-Faktor für diesen Übergang sehr klein ist. Daher kann eine

ausreichende Anregung von v' = 3 im allgemeinen nur mit solch starken Lasern erreicht werden. Analog ist die Situation bei $H_2O$. Hier führen selbst Leistungen im Bereich von 4 J/cm² noch nicht zur Sättigung. Für $O_2$ reicht ein wesentlich schwächerer Laser aus, da diese Übergänge selbst bei < 100 mJ/cm² vollständig abgesättigt sind. Der starke Laser ermöglicht die Ausleuchtung einer größeren Fläche, so daß trotzdem noch von jedem Punkt der Fläche so viel Licht emittiert wird, daß eine Analyse der Intensitätsverteilung für einzelne Laserpulse möglich ist.

Einige wichtige Punkte der oben erläuterten bevorzugten Ausführungsform des vorliegenden Verfahrens sollen noch einmal kurz zusammengefaßt werden:

1) Durch die sehr kurze Lebensdauer des ²Σ (v' = 3) Zustandes des OH kann das Verfahren der LIF auch bei hohen Drücken verwendet werden. Das gleiche gilt für $H_2O$ und $O_2$.

2) In einigen Fällen (z. B. OH) kann mit einem breitbandigen Laser das Temperaturfeld über die spektrale Zerlegung der Fluoreszenz bestimmt werden.

3) Durch die Verwendung eines abstimmbaren Excimerlasers kann eine großflächige Ausleuchtung mit einem hohen Anregungsgrad, selbst für schwach absorbierende Moleküle, erreicht werden.

Im folgenden werden noch einige Einrichtungen zur Durchführung verschiedener Ausführungsformen des vorliegenden Verfahrens beschrieben, die für die praktische Anwendung besonders zweckmäßig sind.

Wie Fig. 2 zeigt, kann ein räumliches Meßvolumen oder Objekt 0 mit Hilfe von zwei sich z. B. unter einem Winkel von 90° schneidenden Abschnitten S1 und S2 eines z. B. streifenförmigen Lichtbündels durchstrahlt werden. Das streifenförmige Lichtbündel, das das als Flamme dargestellte Objekt O zweimal durchläuft, kann mit Hilfe einer Zylinderlinsen-Kollimatoranordnung Z1, Z2 und selektiv reflektierenden Spiegeln Sp₁, Sp₂, die die Laserstrahlung reflektieren, die Fluoreszenzstrahlung jedoch durchlassen, erzeugt werden. Mit zwei Kameras K1 und K2, die das vom Spiegel Sp₁ bzw. Sp₂ durchgelassene Fluoreszenzlicht erfassen, kann eine angenäherte räumliche Dichteund/oder Temperaturverteilung im Objekt O durch die Registrierung zweier z. B. orthogonaler Schnitte ermittelt werden. Die Kameras sind vorzugsweise elektronische Bildverstärkerkameras, die mit hohere Bildfolgefrequenz arbeiten, so daß die für das Verfahren benötigten Bildpaare entsprechend der Intensität zweier verschiedener Fluoreszenzlinien mit kurzem Zeitabstand aufgenommen werden können.

Zur Fluoreszenzanregung können zwei Laser L1, L2, welche kurz hintereinander mit verschiedenen Anregungsfrequenzen blitzen, verwendet werden. Die Fluoreszenzstrahlung kann auch gleichzeitig angeregt und dann spektral zerlegt werden, um die interessierenden Linien zu erfassen. Das Laserstrahlungsbündel S2 wird schließlich in einem Absorber A absorbiert.

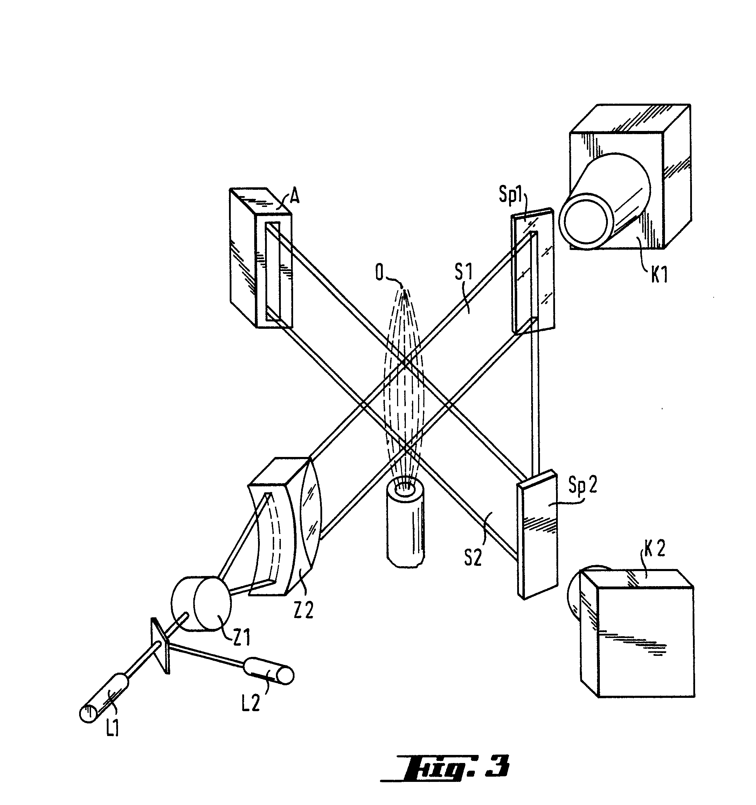

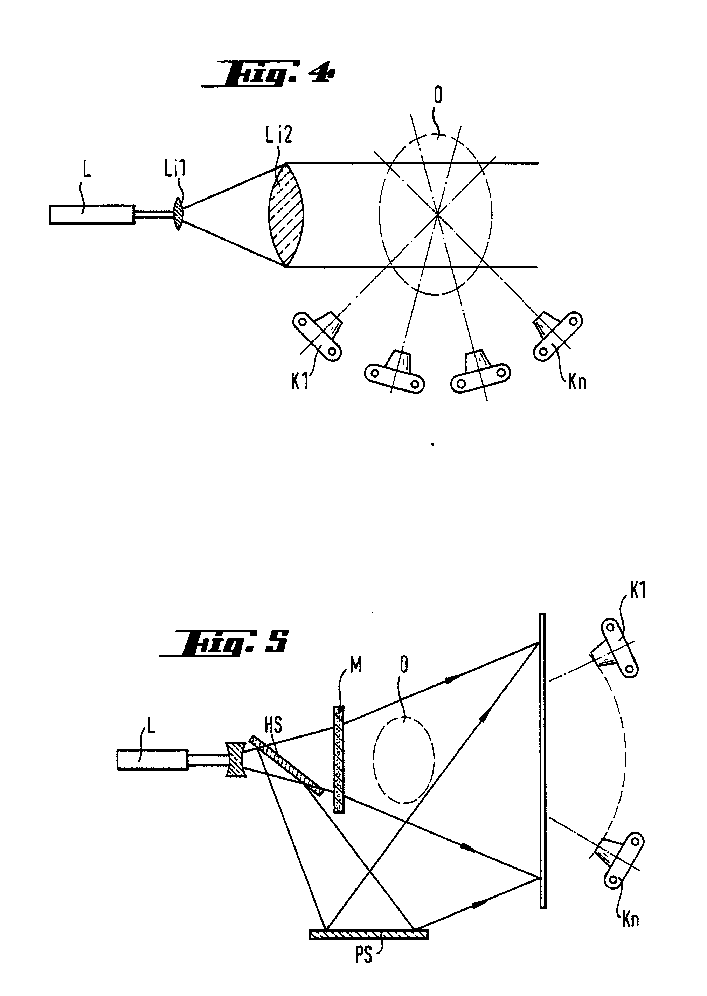

Bei der Einrichtung gemäß Fig. 4 wird das Meßvolumen oder Objekt O mit einem Laserstrahlungsbündel durchstrahlt, das mittels eines Lasers L und einer Strahlaufweitungsoptik aus zwei Sammellinsen Li1 und Li2 erzeugt wird. Zur Erzielung einer vollständigen räumlichen Auflösung wird das fluoreszierende Gas im Meßvolumen oder Objekt O mit mehreren Kameras K1 bis Kn gleichzeitig aufgenommen, so daß eine tomographische Rekonstruktion der räumlichen Intensitätsverteilung möglich wird, z. B. durch eine sog. Radon-Transformation.

Bei allen bisher genannten Verfahren ist es denkbar, zur Zeitauflösung der Temperaturänderungen Filmaufnahmen des Fluoreszenzlichtes herzustellen. Wird eine kontinuierliche Zeitauflösung gewünscht, sind sogenannte Schmierbildaufnahmen zweckmäßig.

Fig. 5 zeigt eine Einrichtung zur Gewinnung von Daten zur Dichte-und/oder Temperaturbestimmung welche mit einem holographischen Verfahren arbeitet. Bei dieser Ausführungsform des vorliegenden Verfahrens wird nicht die durch die Anregung der Moleküle erzeugte Fluoreszenz, sondern lediglich die Absorption der Anregungslinie im Gas im Meßvolumen oder Objekt O nutzbar gemacht. Die Einrichtung gemäß Fig. 5 enthält einen Laser L, dessen Ausgangsstrahlungsbündel durch eine Zerstreuungslinse divergent gemacht und durch einen Bündelteiler, wie einen halbdurchlässigen Spiegel HS in ein Objektbündel und ein zu diesem kohärentes Referenzbündel aufgespalten wird. Das Objektbündel fällt durch eine als Diffusor wirkende Mattscheibe M und durch das Objekt O auf eine Hologrammplatte H, z. B. eine Photoplatte, während das Referenzbündel durch einen Planspiegel PS um das Objekt O herum auf die Hologrammplatte geworfen wird. Die Absorption bewirkt eine Phasenverschiebung des durch das Objekt hindurchtretenden Anregungslichtes im Objektbündel. Diese Apparatur wird nun zusammen mit mehreren Kameras K1 bis Kn dazu verwendet, die Dichte-und/oder Temperaturverteilung im Objekt durch ein sogenanntes Doppelbelichtungshologramm zu messen.

Bei der Herstellung eines Doppelbelichtungshologramms wird die Hologrammplatte H tatsächlich gleichzeitig mit einem durch das Objekt hindurchgehenden Strahlungsbündel und einem um das Objekt herumgeleiteten kohärenten Referenzbündel beleuchtet. Dadurch entsteht ein erstes Hologramm. Der gleiche Vorgang wird dann zu einem beliebigen (späteren) Zeitpunkt (mit einem anderen Objekt) wiederholt. Nach der Entwicklung der so doppelbelichteten Hologrammplatte zeigt eine Rekonstruktion dann Interferenzstreifen, die im allgemeinen der Phasendifferenz der beiden Objekte entsprechen. Wird bei der ersten Belichtung ein sogenanntes Nullobjekt belichtet - also zum Beispiel die leere Apparatur - so sind in dem ersten Hologramm nur die Eigenschaften der Apparatur gespeichert. Wird nun bei der zweiten Belichtung ein beliebiges Objekt O in den Objektstrahlengang gebracht, so erhält man als spätere Rekonstruktion die reine Phasenstruktur des Objektes O. Auch eine eventuell vorhandene Amplitudenstruktur des Objektes wird wiedergegeben. Diese ist jedoch entsprechend der Eigenschaft des Nullobjektes überstrahlt.

Die Phasenverschiebungen des Objektes O in verschiedenen Durchstrahlungsrichtungen können mit Hilfe der Kameras K1 bis Kn in Form von Interferenzstreifen sichtbar gemacht werden. Es handelt sich bei diesen Phasenverschiebungen jedoch immer um die integrale Phasenverschiebung des Lichtes in dem gesamten Objekt O. Will man nun die räumliche Dichteverteilung des Objektes O erhalten, so muß man aus diesen verschiedenen Dichteintegralen durch eine tomographische Rekonstruktion die lokalen Dichtewerte berechnen. Dieses Verfahren wird als holographische oder interferometrische Tomographie bezeichnet.

Durch das oben erläuterte Doppelbelichtungshologramm nicht nur die Phasendifferenz zwischen einem Nullobjekt und dem interessierenden Objekt O sichtbar gemacht werden kann, sondern genauso gut der Phasenunterschied zwischen zwei Objekten O1 und O2. Dazu wird in einer ersten Hologrammbelichtung das Objekt O1 und dann zu einem beliebigen späteren Zeitpunkt oder auch gleichzeitig mit einem zweiten Laser das Hologramm O2 auf die Hologrammplatte belichtet.Dieses Differenz-Verfahren erster Art wird für den vorliegenden Zweck nun noch weiter abgewandelt, indem für das zweite Hologramm, welches im Doppelbelichtungsverfahren auf die Hologrammplatte belichtet wird, eine andere Laserfrequenz verwendet wird. Die auf die Entwicklung folgende Rekonstruktion eines solchen Differenz-Hologramms zeigt dann ein triviales Muster für die Differenzfrequenz der Laserfrequenzen (d. i. ein System von konzentrischen Kreisen oder von annähernd parallelen Streifen), welches zusätzlich durch die unterschiedlichen Phasengänge der beiden Frequenzen F1 und F2 in dem Objekt verformt ist. Durch die Auswertung dieser Interferogramme läßt sich also die unterschiedliche Phasendrehung des Lichtes für die zwei Lichtfrequenzen F1 und F2 in einem Hologramm speichern. Mit zwei Differenzhologrammen dieser Art läßt sich dann die Temperaturverteilung im Objekt in der folgenden Weise bestimmen:

Aus dem ersten Differenzhologramm erhält man die Dichtedifferenz $n_2-n_1$, für 2 Rotationszustände $j_2$, $j_1$, bei den Frequenzen $\nu_2$ und $\nu_1$ nach dem Boltzmann-Gesetz

$$n_2-n_1 = A \cdot \{(2j_2+1)e^{-E_2/kT} - (2j_1+1)e^{-E_1/kT}\} \, . \qquad (12)$$

Das zweite Differenzhologramm liefert die Dichtedifferenz $n_3-n_1$ für einen weiteren Rotationszustand $j_3$ bei der Frequenz $\nu_3$ relativ zum Rotationszustand $j_1$:

$$n_3-n_1 = A \cdot \{(2j_3+1)e^{-E_3/kT} - (2j_1+1)e^{-E_1/kT}\}. \qquad (13)$$

Der Quotient R der gemessenen Dichtedifferenzen erlaubt dann die Bestimmung der Temperatur auf numerischem Wege aus der folgenden Gleichung mit der einen Unbekannten T:

$$R = \frac{n_2-n_1}{n_3-n_1} = \frac{(2j_2+1)e^{-E_2/kT} - (2j_1+1)e^{-E_1/kT}}{(2j_3+1)e^{-E_3/kT} \qquad (2j_1+1)e^{-E_1/kT}} \qquad (14)$$

Für das vorliegende Verfahren können auch andere Molekülarten verwendet werden, z.B. CH, NH, SH, NO.

## Ansprüche

1. Verfahren zum berührungsfreien Gewinnen von Daten zur Ermittlung der Dichte und Temperatur einer molekularen Gaskomponente in einem Gasmoleküle enthaltenden Meßvolumen, in dem die Gasmoleküle Stoßprozesse mit einer bestimmte Stoßfrequenz erleiden, **dadurch gekennzeichnet,** daß durch Laserstrahlung mindestens zwei molekulare Rotationsübergänge der molekularen Gaskomponente angeregt werden, wobei angeregte Moleküle der Gaskomponente entstehen, und daß die Konzentration der erzeugten angeregten Moleküle in einer sich an die Anregung anschließenden Zeitspanne optisch bestimmt wird, während der die Beeinflussung der Konzentration der angeregten Moleküle durch die Stoßprozesse (Quenchen) vernachlässigbar ist.

2. Verfahren nach Anspruch 1, **dadurch gekennzeichnet,** daß die Konzentration der angeregten Moleküle durch Messung einer von den angeregten Molekülen emittierten Fluoreszenzstrahlung bestimmt wird.

3. Verfahren nach Anspruch 1, **dadurch gekennzeichnet,** daß die Konzentration der angeregten Moleküle durch Messung der optischen Absorption dieser Moleküle bestimmt wird.

4. Verfahren nach Anspruch 1, **dadurch gekennzeichnet,** daß die Moleküle der Gaskomponente im elektronisch angeregten Zustand prädissoziieren und daß die von den angeregten Molekülen während der Prädissoziationslebensdauer emittierte Fluoreszenzstrahlung gemessen wird.

5. Verfahren nach Anspruch 4, **dadurch gekennzeichnet,** daß die Fluoreszenzstrahlung bei mindestens zwei Wellenlängen gemessen wird.

6. Verfahren nach Anspruch 4, **dadurch gekennzeichnet,** daß die durch die Laserstrahlung angeregte molekulare Gaskomponente mindestens eine der Verbindungen $H_2O$ und OH enthält.

7. Verfahren nach Anspruch 6, dadurch gekennzeichnet, daß die direkte Fluoreszenz des OH aus dem angeregten Zustand $v' = 3$ gemessen wird.

8. Verfahren nach Anspruch 1, **dadurch gekennzeichnet,** daß die molekulare Gaskomponente eine zweiatomige Verbindung enthält.

9. Verfahren nach Anspruch 3, **dadurch gekennzeichnet,** daß die Absorption mindestens zweier Anregungslinien holographisch gemessen wird, bei denen sowohl die elektronische Quantenzahl als auch die Rotations-und die Schwingungs-Quantenzahl im Anfangs-und Endzustand verschieden sind.

10. Verfahren nach Anspruch 9, **dadurch gekennzeichnet,** daß die Absorption durch Doppelbelichtungshologramme gemessen wird.

11. Verfahren nach Anspruch 1, **dadurch gekennzeichnet,** daß die Lebensdauer des angeregten Zustandes der Moleküle der Gaskomponente durch laserinduzierte Entvölkerung verkürzt wird.

12. Verfahren nach Anspruch 1, **dadurch gekennzeichnet,** daß die Anregung durch einen Laserstrahlungsimpuls erfolgt, dessen Dauer kurz gegen die reziproke Stoßfrequenz im Gas ist, und daß die Meßzeit elektronisch auf eine Zeitspanne begrent wird, die kurz im Vergleich zur reziproken Stoßfrequenz ist.

13. Einrichtung zum Gewinnen von Daten zur Ermittlung der Dichte und Temperatur einer molekularen Gaskomponente in einem ein Gas enthaltenden Meßvolumen, in dem eine vorgegebene Stoßfrequenz herrscht, **gekennzeichnet durch** eine Laseranordnung zum Erzeugen von Strahlung mindestens einer Wellenlänge zum Anregen eines molekularen Übergangs der molekularen Gaskomponente unter Erzeugung von angeregten Molekülen der Gaskomponente und durch eine Anordnung zum optischen Registrieren der Absorption der angeregten Moleküle während einer sich an die Anregung anschließenden Zeitspanne, die kurz gegen die reziproke Stoßfrequenz ist.

14. Einrichtung zum Gewinnen von Daten zur Ermittlung der Dichte und Temperatur einer molekularen Gaskomponente in einem ein Gas enthaltenden Meßvolumen, in dem eine vorgegebene Stoßfrequenz herrscht, **gekennzeichnet durch** eine Laseranordnung zum Erzeugen von Strahlung mindestens einer Wellenlänge zum Anregen eines molekularen Übergangs der molekularen Gaskomponente unter Erzeugung von angeregten Molekülen der Gaskomponente und durch eine Anordnung zum Registrieren der Intensität einer von den angeregten Molekülen emittierten Fluoreszenzstrahlung während einer sich an die Anregung anschließenden Zeitspanne, die kurz gegen die reziproke Stoßfrequenz ist.

15. Einrichtung nach Anspruch 13, **dadurch gekennzeichnet,** daß die Registrieranordnung eine holographische Registrieranordnung ist.

16. Einrichtung nach einem der Ansprüche 13, 14 oder 15, **gekennzeichnet durch** eine Vorrichtung ($Z_1$, $Z_2$; $Li_1$, $Li_2$) zur Umformung der Laserstrahlung in ein bandförmiges Strahlungsbündel ($S_1$).

*Fig. 1*

**Fig. 2**

**Fig. 3**

Fig. 4

Fig. 5